# EUROPEAN PATENT APPLICATION

(11) **EP 1 844 830 A1**
(43) Date of publication of application: **17.10.2007**
(21) Application number: 06125916.4
(22) Date of filing: 12.12.2006
(51) Int. Cl.: A63H 33/00, B44C 3/04, C08J 9/32, C08K 7/22

(54) **Sponge-like sculpturing compound**

(30) Priority: 11.04.2006 US 402115
(71) Applicant: Lai On Products (Industrial) Ltd., Kwai Chung Hong Kong (CN)
(72) Inventor: Tak Kai Torry Lee, Tai Tam, Hong Kong (HK); Huimin Wang, Kwai Chung, N.T., Hong Kong (HK)
(74) Representative: Szynka, Dirk

(57) **Abstract**

A clay modeling composition and method of manufacture are provided. In one embodiment, the modeling compositions includes reverse osmosis water (50 - 70 wt%), polymer resin (15 - 25 wt%), polyethylene glycol (1-10 wt%), lightweight filler (1 - 5 wt%), sodium tetraborate (0.30 -4.0 wt%), glycerin (1 - 10 wt%), propylene glycol (1 - 15 wt%), sorbitol (3 - 28 wt%) and preservatives (0.1 - 1.0 wt%).

## Description

### Field of the Invention

This invention relates to sculpturing compounds, and in more particular applications, to sculpturing compounds for children.

### Background of the Invention

The present invention is directed to lightweight sculpturing compounds, wherein the density is less than 1. Lightweight sculpturing compounds are distinguishable from heavier compounds which have densities greater than 1. More specifically, the compounds may also be described as sponge-like compounds.

Sponge-like sculpturing compounds typically include non-water-based compounds, oil-based compounds and water-based compounds. Non-water-based lightweight compounds include thermoplastic modeling compositions and wax/oil-based modeling compositions. The thermoplastic modeling compositions are generally used for producing design models in the automobile industry, such as described in U.S. Patent 3,607,332. The modeling compositions are usually comprised of plastic, minerals, binders, light fillers, and color agents, which can be processed above 50°C. The shapes formed using this composition become rigid and much harder as the ambient temperature drops. However, these compositions, as used in industrial applications, have no final aggregate state and cannot be kneaded and/or modeled at room temperature and are therefore not suitable as sculpturing compounds for children.

Alternatively, one wax/oil based lightweight modeling composition consists of solid wax, pasty wax, oil base and lightweight hollow microbead filler. Microbeads are monosized polymer particles which are mainly composed of two different classes of polymers, such as polystyrene and polyacrylics having varying degrees of cross linking. This kind of compound has lightweight behavior and can be kneaded and processed at room temperature. The resulting product is suitable for use by children.

Water-based compounds are normally air-dryable and incorporate starch as filler. However, these compounds easily crack, flake, and crumble after drying because of poor plasticity, and substantial drying shrinkage. Even incorporating large proportions of filler in the compound mixture, there is still shrinkage due to volume reduction after drying. Additionally, water-based lightweight compounds combine water soluble resin such as poly vinyl alcohol (PVA) and lightweight fillers. Although they have an improved resistant to cracking, flaking, and crumbling, they can be initially sticky as well as having inferior strength, elasticity and moisture resistance.

### Summary of the Invention

In accordance with one feature of the invention, a modeling composition is provided. The composition includes 50-70 wt.% reverse osmosis water, 15-25 wt.% polymer resin, 1.0-5 wt.% lightweight fillers, 1.0-10 wt.% glycerin, 1.0-15 wt.% propylene glycol, 3.0-28 wt.% sorbitol, 1.0-10 wt.% polyethylene glycol, and 0.3-4.0 wt.% sodium tetraborate.

According to one form, a modeling composition is provided. The composition includes 40-60 wt.% reverse osmosis water, 15-25 wt.% polymer resin, 1.0-5.0 wt.% lightweight fillers, 1.0-10 wt.% glycerin, 1.0-8.0 wt.% propylene glycol, 3.0-25 wt.% sorbitol, 1.0-10 wt.% polyethylene glycol, 0.3-5.0 wt.% sodium tetraborate, and 5-15 wt.% precipitated silica.

According to one form, the polymer resin is a water based polymer or copolymer.

In accordance with one form, the water based polymer or copolymer includes at least one of poly vinyl alcohol, water-based polyurethane, water-based acrylic polymer and copolyester.

In one form, the lightweight fillers include at least one of encapsulated microspheres and microbeads.

According to one form, the lightweight fillers are copolymers encapsulating a gas.

In accordance with one form, the volume of the lightweight fillers expands up to 40 times its original volume.

In one form, the lightweight fillers are hollow spheres of phenolic resin.

In one form, the composition further includes 0.1-20 wt.% pigments and 0.02-0.2 wt.% preservatives.

According to one form, the preservatives are selected from the parabens series.

In accordance with one form, the preservatives include at least one of methylparaben, propylparaben, ethylparaben, and phenoxyethanol.

In one form, a method of manufacturing a modeling composition is provided. The method includes the steps of mixing polyethylene glycol, propylene glycol and sorbitol in a first vessel, mixing disodium tetraborate decahydrate in a second vessel and combining and mixing the compositions of the first vessel and the second vessel together with reverse osmosis water, lightweight filler and polymer resin.

According to one form, pigments and preservatives are added in the step of combining and mixing.

In accordance with one form, the composition of the second vessel is combined after the reverse osmosis water, lightweight filler and polymer resin have been added.

Other objects, advantages, and features will become apparent from a complete review of the entire specification, including the appended claims and drawings.

### Detailed Description of the Preferred Embodiments

While the present invention is susceptible of embodiment in many different forms, as will be described herein in detail specific embodiments thereof with the understanding that the present disclosure is to be considered as an exemplification of the principles of the invention and is not intended to limit the invention to the specific embodiments illustrated.

In one embodiment, a water-based sponge-like sculpturing composition includes reverse osmosis water (50-70 wt%), polymer resin (15-25 wt%), lightweight fillers (1.0-5.0 wt%), glycerin (1.0-10 wt%), propylene glycol (1.0-15 wt%), sorbitol (3.0-28 wt%), polyethylene glycol (1 - 10 wt%), and sodium tetraborate (0.3-4.0 wt%). Optionally, additional components such as pigments and preservatives may be incorporated into the composition.

In an alternative embodiment, the water-based sponge-like sculpturing composition includes reverse osmosis water (40-60 wt.%), polymer resin (15-25 wt.%), lightweight fillers (1.0-5.0 wt.%), glycerin (1.0-10 wt.%), propylene glycol (1.0-8.0 wt.%), sorbitol (3.0-25 wt.%), polyethylene glycol (1.0-10 wt.%), sodium tetraborate (0.3-5.0 wt.%), and precipitated silica (5-15 wt.%).

In a preferred embodiment, the polymer resin is poly vinyl alcohol (PVA) such as from Celvol series. The degree of hydrolysis is 88.00±2.00 mole %, and 4% solution viscosity, 5.70±1.50 cP. The bulk density is 0.6-0.7 grams per milliliter. The melting point range is 180-250°C. It should be understood by those skilled in the art that other polymer resins, as well as other forms of PVA may be utilized. For example, the polymer resin can include other water-soluble polymers such as water based polyurethane, water based acrylic polymer or copolyester or other water-soluble polymers, as well as their mixtures.

In one embodiment, the lightweight filler includes encapsulated copolymers or microspheres. Encapsulated copolymers or microspheres, such as made under the name of Expancel®, manufactured by Akzo Nobel, are completely different materials from hollow microbeads, each with different microstructures and functions. For example, the microspheres have a polymer shell encapsulating a gas which is quite different from hollow microbeads used in other commercial clay products. When the gas inside the shell is heated, the internal pressure increases and the thermoplastic shell softens, resulting in a dramatic increase in the volume of the microspheres. When fully expanded, the volume of the microspheres can increases more than 40 times the original volume. Microbeads, however, are monosized polymer particles, which are mainly composed of two different classes of polymers like polystyrene and polyacrylics having varying degrees of cross linking. The polymer particles have a perfect spherical shape, are highly monosized and are made within a wide particle size range, such as 0.5 - 500 micron.

One suitable form of microspheres or encapsulated copolymers that can be used is EXPANCEL® DE (Akzo Nobel) products series products with density ranges of 20-70 KG/m³, such as EXPANCEL 051, EXPANCEL 091, EXPANCEL 461, EXPANCEL 551, etc. Additionally, other suitable forms include Phenoset® microspheres or Minoset® microspheres. Another example of suitable lightweight microspheres includes DUALITE® expanded spheres manufactured by Pierce and Stevens, which consist of a flexible, ultra-low density thermoplastic hollow microsphere core filled with a gas. Usually, this form of microsphere has its surface coated with calcium carbonate.

Additionally, lightweight fillers, such as cenospheres can be utilized. Cenospheres are small, lightweight, inert, hollow microspheres comprising largely of silica (such as synthetic precipitated silica) and alumina and are filled with low pressure gases.

Other lightweight fillers can also include expandable plastic powders, such as expandable thermoplastic powders and expandable thermosetting plastic powders. The expandable thermoplastic powders include expandable polystyrene powders, expandable polyethylene powders, expandable polypropylene powders and so on. The expandable thermosetting plastic powders mean expandable polyurethane plastic powders, etc.

One embodiment of a modeling composition, Example 1, is shown in Table 1.

### Example 1:

| Ingredient | Percentage range by weight % | Perfected range by weight % |
|---|---|---|
| RO water | 50-70 | 55-65 |
| Polymer resin | 15-25 | 18-22 |
| Lightweight fillers | 1.0-5.0 | 2.5-4.5 |
| Glycerin | 1.0-10 | 3.0 - 6.0 |
| Propylene glycol | 1.0-15 | 6.0 - 10 |
| Sorbitol | 3.0-28 | 7.0 - 20 |
| Polyethylene glycol | 1.0 - 10 | 2.0 - 7.0 |
| Sodium tetraborate | 0.3 - 4.0 | 0.5-2.0 |
| Pigment | 0.1-20 | 0.2-16 |
| Preservative | 0.02-0.2 | 0.08-0.13 |

As shown in table 1, the modeling compound includes reverse osmosis water (50-70 wt%), polymer resin (15-25 wt%), lightweight fillers (1.0-5.0 wt%), glycerin (1.0-10 wt%), propylene glycol (1.0-15 wt%), sorbitol (3.0-28 wt%), polyethylene glycol (1 - 10 wt%), and sodium tetraborate (0.3 -4.0 wt%) as well as various pigments (0.1 - 20 wt%) and preservatives (0.02 - 0.2 wt%). The perfected range is: reverse osmosis water (55 - 65 wt%), polymer resin (18-22 wt%), lightweight fillers (2.5 - 4.5 wt%), Glycerin (3.0 - 6.0 wt%), Propylene glycol (6.0 - 10 wt%), Sorbitol (7.0 - 20 wt%), Polyethylene glycol (2.0 - 7.0 wt%), and Sodium tetraborate (0.5-2.0 wt%).

Additional examples are shown in Table 2 below.

### Example 2:

**Table 2**

| Ingredient | Percentage range by weight % | Perfected range by weight % |
|---|---|---|
| RO water | 40-60 | 45-55 |
| Polymer resin | 15-25 | 17-21 |
| Expancel® microspheres | 1.0-5.0 | 2.5 - 4.0 |
| Synthetic Silica | 5.0 -15 | 8.0-12 |
| Glycerin | 1.0-10 | 3.0 - 6.0 |
| Propylene glycol | 1.0-8.0 | 2.0-5.0 |
| Sorbitol | 3.0-25 | 6.0 - 18 |
| Polyethylene glycol | 1.0 - 10 | 2.0 - 7.0 |
| Sodium tetraborate | 0.3 - 5.0 | 1.0-4.0 |
| Pigment | 0.1-20 | 0.2-16 |
| Preservative | 0.02-0.2 | 0.08-0.13 |

In one embodiment, the pigments include regular pigments, neon pigments and pearl pigments as well as their mixtures. For example, the regular pigments include Ultramarine Blue, FD&C Yellow 5 Aluminum Lake, FD&C Red 40 Aluminum Lake, FD&C Yellow 6 Aluminum Lake, FD&C Blue 1 Aluminum Lake, Titanium Dioxide, D&C red 7 Calcium Lake, TG-601 Gold, K-100 Black or their blends. The content range of the regular pigments is from 0.1 to 5 %by weight. In one embodiment, the perfected range is 0.3 to 3 %by weight.

The neon pigments include pigments such as Sterling Florescent Red 3, Sterling Florescent Blue 60, Sterling Florescent Yellow 27, Sterling Florescent Strong Magenta 21, Sterling Florescent Orange 5, Sterling Florescent Green 8 or their blends have a content range of 0.1 to 3 %by weight, and the preferred range is 0.5 to 2 % by weight.

The pearl pigments include 5500 Timica silver sparkle, 1500 Timica extra bright, 110A Timica pearl white as well as their blends with regular or Neon pigments etc. The content range is from 5 to 20 %by weight. The preferred range is 10 to 15 %by weight.

Preservatives having pH values of 3 to 10 are suitable for the present composition. The preservative as used in example 1 is paraben series such as Propylparaben and Methylparaben.

The modeling composition resulting from the composition of Table 1 has a density range of 30-60 KG/m³ at room temperature. The pH ranges in value from 6.8 to 7.8.

### Example 3:

One embodiment of the method of manufacturing the modeling composition is outlined below:
Phase A: Lightweight filler, pigments, and preservative are added to a mixer or a tank for premixing.
Phase B:
   1. Charge turbine mixing tank with 20% of required reverse osmosis water at room temperature.
   2. Turn on turbine, sweep, and homogenize.
   3. Add polyethylene glycol, propylene glycol, sorbitol respectively, and continue mixing until the solution becomes uniform.
Phase C: In a separate jacketed tank
   1. Add 60% of required RO water.
   2. Heat the water to 75°-85°C (pre-heated water can be used).
   3. Add poly vinyl alcohol and continue mixing until the poly vinyl alcohol is completely dissolved.
Phase D: In a separate container, mix disodium tetraborate decanhydrate (Borax) and the remainder of the reverse osmosis water (approximately 20% of the total)
   1. Heat the solution to between 70°C and 80°C (Pre-heated water can be used).
   2. Once solution reaches desired temperature and the Borax is completely dissolved, add Phases B & C to Phase A, respectively,
   3. Continue mixing until all compounds are uniform.
   4. Then add Phase D and continue mixing for 10-20 minutes until all compounds are uniform.
   5. Discharge the fully compounded modeling compound from the mixer or tank.

While the invention has been described herein with regards to specific examples and embodiments, it should be understood by those skilled in the art that other examples and embodiments are also contemplated.

## Claims

1. A sponge-like modeling composition comprising:
50-70 wt.% reverse osmosis water;
15-25 wt.% polymer resin;
1.0-5.0 wt.% lightweight fillers;
1.0-10 wt.% glycerin;
1.0-15 wt.% propylene glycol;
3.0-28 wt.% sorbitol;
1.0-10 wt.% polyethylene glycol ; and
0.3-4.0 wt.% sodium tetraborate.

2. The modeling composition of claim 1 wherein the polymer resin is a water based polymer or copolymer.

3. The modeling composition of claim 2 wherein the water based polymer or copolymer includes at least one of polyvinyl alcohol, water-based polyurethane, water-based acrylic polymer and copolyester.

4. The modeling composition of claim 1 wherein the lightweight fillers include at least one of encapsulated microspheres and microbeads.

5. The modeling composition of claim 4 wherein the lightweight fillers are copolymers encapsulating a gas.

6. The modeling composition of claim 4 wherein the volume of the lightweight fillers expands up to 40 times its original volume.

7. The modeling composition of claim 4 wherein the lightweight fillers are hollow spheres of phenolic resin.

8. The modeling composition of claim 4 wherein the lightweight fillers are expandable plastic powders.

9. The modeling composition of claim 8 wherein the expandable plastic powders include at least one of expandable polystyrene powders, expandable polyethylene powders, expandable polypropylene and expandable polyurethane plastic powders.

10. The modeling composition of claim 1 further comprising 0.1-20 wt.% pigments and 0.02-0.2 wt.% preservatives.

11. The modeling composition of claim 10 wherein the preservatives are selected from the parabens series.

12. The modeling composition of claim 11 wherein the preservatives include at least one of methylparaben, propylparaben, ethylparaben, and phenoxyethanol.

13. A method of manufacturing a modeling composition comprising the steps of:
mixing polyethylene glycol, propylene glycol and sorbitol in a first vessel; mixing disodium tetraborate decahydrate in a second vessel; and combining and mixing the compositions of the first vessel and the second vessel together with reverse osmosis water, lightweight filler and polymer resin.

14. The method of claim 13 wherein pigments and preservatives are added in the step of combining and mixing.

15. The method of claim 13 wherein the composition of the second vessel is combined after the reverse osmosis water, lightweight filler and polymer resin have been added.

16. A sponge-like modeling composition comprising:
40-60 wt.% reverse osmosis water;
15-25 wt.% polymer resin;
1.0-5.0 wt.% lightweight fillers;
1.0-10 wt.% glycerin;
1.0-8.0 wt.% propylene glycol;
3.0-25 wt.% sorbitol;
1.0-10 wt.% polyethylene glycol;
0.3-5.0 wt.% sodium tetraborate; and
5.0-15 wt.% synthetic silica.

17. The modeling composition of claim 16 wherein the polymer resin is a water based polymer or copolymer.

18. The modeling composition of claim 17 wherein the water based polymer or copolymer includes at least one of polyvinyl alcohol, water-based polyurethane, water-based acrylic polymer and copolyester.

19. The modeling composition of claim 16 wherein the lightweight fillers include at least one of encapsulated microspheres and microbeads.

20. The modeling composition of claim 19 wherein the lightweight fillers are copolymers encapsulating a gas.

21. The modeling composition of claim 19 wherein the volume of the lightweight fillers expands up to 40 times its original volume.

22. The modeling composition of claim 19 wherein the lightweight fillers are hollow spheres of phenolic resin.

23. The modeling composition of claim 19 wherein the lightweight fillers are expandable plastic powders.

24. The modeling composition of claim 23 wherein the expandable plastic powders include at least one of expandable polystyrene powders, expandable polyethylene powders, expandable polypropylene and expandable polyurethane plastic powders..

25. The modeling composition of claim 16 further comprising 0.1-20 wt.% pigments and 0.02-0.2 wt.% preservatives.

26. The modeling composition of claim 25 wherein the preservatives are selected from the parabens series.

27. The modeling composition of claim 26 wherein the preservatives include at least one of methylparaben, propylparaben, ethylparaben, and phenoxyethanol.
